(19) Europäisches Patentamt
European Patent Office
Office européen des brevets

(11) **EP 3 460 540 A1**

(12) **EUROPEAN PATENT APPLICATION**

(43) Date of publication:
**27.03.2019 Bulletin 2019/13**

(51) Int Cl.:
*G02B 5/18* (2006.01)     *G02B 5/30* (2006.01)
*G02B 27/28* (2006.01)

(21) Application number: **18196224.2**

(22) Date of filing: **24.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.09.2017 JP 2017183518**
**11.09.2018 JP 2018169737**

(71) Applicant: **CANON KABUSHIKI KAISHA**
**Ohta-ku**
**Tokyo 146-8501 (JP)**

(72) Inventor: **OTSUKA, Hiroshi**
**Tokyo 146-8501 (JP)**

(74) Representative: **TBK**
**Bavariaring 4-6**
**80336 München (DE)**

(54) **POLARIZATION BEAM SPLITTER AND IMAGE PROJECTION APPARATUS**

(57)     A polarization beam splitter (100) includes a substrate (1), and members. Each member has a refractive index of 2.8 or higher and an extinction coefficient of 1 or smaller for a predetermined wavelength. The polarization beam splitter provides a product with 85% or higher of a transmittance of light for the predetermined wavelength polarized in a first polarization direction perpendicular to the first direction and an incidence direction of incident light on the polarization beam splitter which forms an angle of 90° with respect to the first direction and an angle of 45° with respect to the second direction, and a reflectance of light for the predetermined wavelength polarized in a second polarization direction parallel to the first direction.

FIG. 1

**Description**

BACKGROUND OF THE INVENTION

Field of the Invention

The present invention relates to a polarization beam splitter and an image projection apparatus (projector) using the same, and more particularly to a polarization beam splitter having a grating structure with a period smaller than a use (or working) wavelength and an image projection apparatus using the same.

Description of the Related Art

A conventionally proposed wire grid type polarization beam splitter has a linear grating structure disposed at a fine period of a visible wavelength order in order to separate light beams in different polarization directions. However, the linear grating structure in the wire grid type polarization beam splitter is mainly made of metal and causes a light quantity loss due to the metal, and thereby a reduced light quantity when used for an image projection apparatus.
Robert Magnusson and Mehrdad Shokooh-Saremi, "Physical basis for wideband resonant reflectors", Optics express, The Optical Society, 2008, Vol. 16, Issue 5, pp. 3456-3462 ("Magnusson et al." hereinafter) proposes an optical element having a grating structure made of a highly refractive index material capable of suppressing a light quantity loss. The optical element disclosed in Magnusson et al. is used as a narrow band mirror and a broad band mirror for a laser, and premises that incident light perpendicularly enters an element surface. In other words, the optical element disclosed in Magnusson et al. is not supposed to be applied to a polarization beam splitter that transmits polarized light incident with a specific incident angle and reflects polarized light having a polarization direction orthogonal to the incident light.

SUMMARY OF THE INVENTION

The present invention provides a polarization beam splitter capable of suppressing a light quantity loss and an image projection apparatus using the same.
The present invention in its first aspect provides a polarization beam splitter as specified in claims 1-10. The present invention in its second aspect provides a polarization beam splitter as specified in claim 11.
Further features of the present invention will become apparent from the following description of exemplary embodiments with reference to the attached drawings.

BRIEF DESCRIPTION OF THE DRAWINGS

FIG. 1 is a schematic diagram of a polarization beam splitter according to one embodiment of the present invention.

FIG. 2 is a sectional view of the polarization beam splitter.

FIG. 3 is a sectional view of a polarization beam splitter according to a modification.

FIG. 4 is an enlarged sectional view of the polarization beam splitter.

FIG. 5 illustrates an illustrative using method of the polarization beam splitter.

FIGs. 6A and 6B are graphs of a refractive index and an extinction coefficient of silicon.

FIG. 7 is a graph of an efficiency of a polarization beam splitter according to a first embodiment.

FIGs. 8A and 8B are graphs of a light quantity loss for each polarized light of the polarization beam splitter according to the first embodiment.

FIG. 9 is a graph of an efficiency of a polarization beam splitter according to a second embodiment.

FIG. 10 is a graph of an efficiency of a polarization beam splitter according to a third embodiment.

FIG. 11 is a graph of an efficiency of a polarization beam splitter according to a fourth embodiment.

FIG. 12 is a graph of an efficiency of a polarization beam splitter according to a fifth embodiment.

FIG. 13 is a graph of an efficiency of a polarization beam splitter according to a sixth embodiment.

FIG. 14 is a graph of an efficiency of a polarization beam splitter according to a seventh embodiment.

FIG. 15 is a graph of an efficiency of a polarization beam splitter according to an eighth embodiment.

FIG. 16 is a graph of an efficiency of a polarization beam splitter according to a ninth embodiment.

FIG. 17 is a graph of an efficiency of a polarization beam splitter according to a tenth embodiment.

FIG. 18 is a graph of an efficiency of a polarization beam splitter according to an eleventh embodiment.

FIG. 19 is a graph of an efficiency of a polarization beam splitter according to a twelfth embodiment.

FIG. 20 is a graph of an efficiency of a polarization beam splitter according to a thirteenth embodiment.

FIG. 21 is a graph of an efficiency of a polarization beam splitter according to a fourteenth embodiment.

FIG. 22 is a graph of an efficiency of a polarization beam splitter according to a fifteenth embodiment.

FIG. 23 is a graph of an efficiency of a polarization beam splitter according to a sixteenth embodiment.

FIG. 24 is a graph of an efficiency of a polarization beam splitter according to a seventeenth embodiment.

FIG. 25 is a graph of an efficiency of a polarization beam splitter according to an eighteenth embodiment.

FIG. 26 is a graph of an efficiency of a polarization beam splitter according to a nineteenth embodiment.

FIG. 27 is a graph of an efficiency of a polarization beam splitter according to a twentieth embodiment.

FIG. 28 illustrates a configuration of an image projection apparatus according to a twenty-first embodiment.

DESCRIPTION OF THE EMBODIMENTS

Referring now to the accompanying drawings, a detailed description will be given of embodiments according to the present invention. In each figure, corresponding elements will be designated by the same reference numerals, and a duplicate description will be omitted.

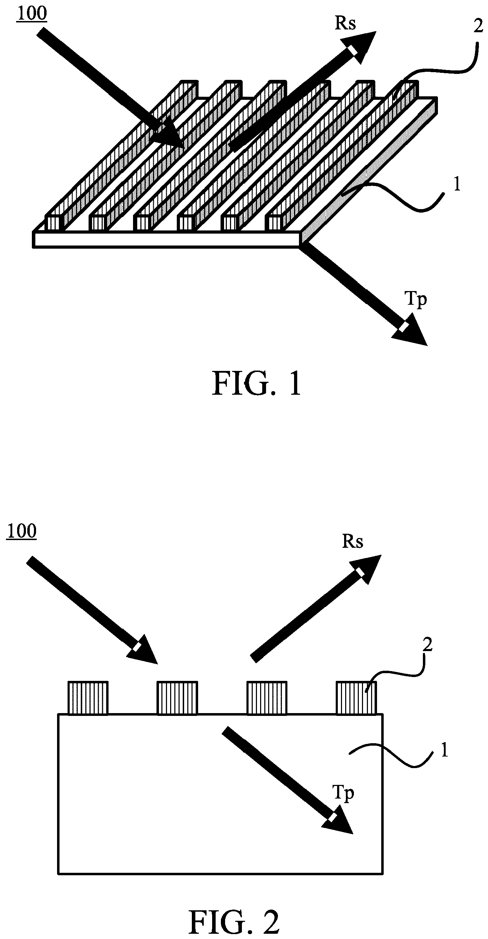

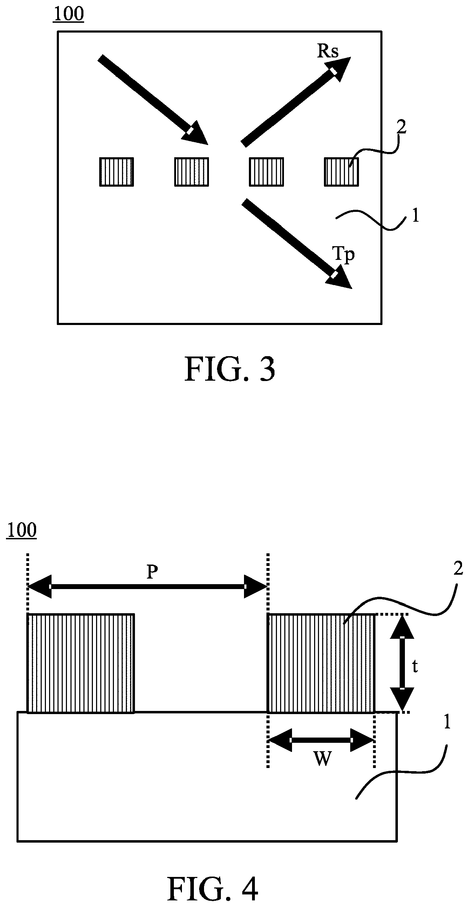

FIG. 1 is a schematic diagram of a polarization beam splitter 100 according to one embodiment of the present invention. FIG. 2 is a sectional view of the polarization beam splitter 100. The polarization beam splitter 100 includes a substrate 1, and a plurality of members 2 each of which is provided on the substrate 1 and extends along an extending direction (first direction). The substrate 1 has a grating structure, in which the members 2 are arranged at predetermined intervals along an orthogonal direction (second direction) orthogonal to the extending direction. This embodiment provides the members 2 on the substrate 1, but may provide them in the substrate 1 as illustrated in FIG. 3.

A grating structure of a wire grid type polarization beam splitter (referred to as a wire grid type polarizer hereinafter) is made of a metallic material. Thus, the incident light polarized in a direction parallel to the longitudinal direction of the member constituting the grating structure is mainly reflected because the free electrons move in a direction to cancel the electric field. The incident light polarized in the direction perpendicular to the longitudinal direction mainly transmits because free electrons are restricted from moving in the direction to cancel the electric field. Thus, the effect of the wire grid type polarizer is derived from metal, and an extinction coefficient in a use wavelength of the physical property of material of the member 2 needs to be higher than a predetermined value.

The extinction coefficient with a value higher than the predetermined value causes the light quantity loss due to the absorption. Thus, the wire grid type polarizer cannot make larger the transmittance of the incident light polarized in the direction perpendicular to the longitudinal direction of the members in the grating structure and the reflectance of the incident light polarized in the direction parallel to the longitudinal direction than predetermined values. More specifically, it is known that the product of the transmittance and the reflectance is about 80%.

The grating structure in the polarization beam splitter 100 according to this embodiment is different from the wire grid polarizer in that it generates a resonance phenomenon due to the size of the structure and the difference in refractive index. In general, one that generates a peculiar phenomenon by applying a highly refractive index material to the grating structure is called a high contrast grating (referred to as HCG hereinafter). The HCG uses a highly refractive index ratio between the members constituting the grating structure and the interstitial medium and the effect (resonance effect) due to the resonance phenomenon caused by the size of the structure. The resonance effect needs a highly refractive index. In order to generate the resonance effect, the extinction coefficient is unnecessary for the grating structure that generates the resonance phenomenon, since the extinction coefficient is correlated with loss amounts in the transmission and reflection, the extinction coefficient may be low for the use wavelength.

According to this embodiment, in order to obtain the resonance effect, the member 2 has a refractive index n of 2.8 or higher and an extinction coefficient k of 1 or smaller for the use wavelength. In other words, unlike the grid structure of the wire grid type polarizer, the grating structure according to this embodiment is made of a material having a highly refractive index and a low extinction coefficient for the use wavelength. When the refractive index n is less than 2.8, the refractive index ratio between the member 2 and the inter-member medium and the refractive index ratio between the member 2 and the substrate 1 become lower, and it is thus difficult to obtain the resonance effect. In addition, the extinction coefficient larger than 1 would increase the light quantity loss during the transmission and reflection.

The polarization beam splitter 100 having the grating structure that includes the members 2 having a highly refractive index and a low extinction coefficient can make an absorption amount smaller than that when the wire grid polarizer is used. The smaller absorption amount can reduce a calorific value and is welcome when the polarization beam splitter 100 is used for an image projection apparatus or the like.

The higher the refractive index of the member 2 is, the larger the refractive index ratio is and the wider the wavelength range (wavelength band) providing the high efficiency is. The refractive index n of the member 2 for the use wavelength may be 3.5 or higher, or 4 or higher.

The lower the extinction coefficient of the member 2 becomes, the smaller the light quantity loss reduces. Thus, the extinction coefficient k of the member 2 may be 0.15 or less, more preferably 0.1 or less.

The member 2 has a rectangular sectional shape in this embodiment, as illustrated in FIG. 2, but the present invention is not limited this embodiment. The member 2 may have a rounded corner sectional shape or a circular sectional shape such as an ellipse. When the following conditional expression is applied, an average value in a height direction and a width direction may be used for each of the width and the height of the member having these shapes.

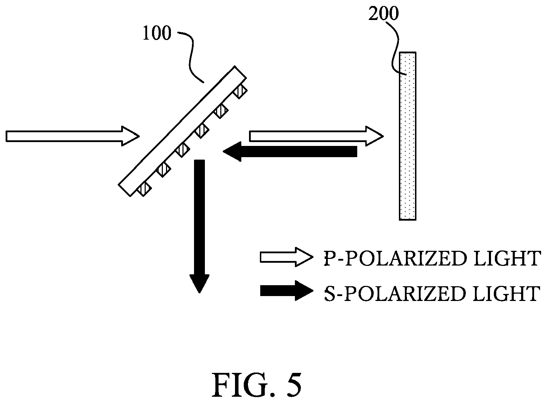

FIG. 5 illustrates an illustrative usage of the polarization beam splitter 100 according to this embodiment. It is assumed in the following description that a first surface is a surface on which the grating structure of the substrate 1 is formed, and a second surface is a surface opposite to the first surface or a surface on which the grating structure is not formed.

The polarization beam splitter 100 is disposed so as to form an angle of approximately 45° from incident light emitted from a light source (not shown). In this embodiment, the incident surface (incident plane) is a surface orthogonal to the extending direction of the member 2 or a surface that contains a direction parallel to the paper surface.

The incident light (referred to as 45° incident light hereinafter) which is emitted from the light source enters the second surface at an angle of about 45° with respect to the polarization beam splitter 100. The polarization beam splitter 100 transmits the P-polarized light polarized in the first polarization direction of the incident light. The first polarization direction is a direction perpendicular to the extending direction and the incident direction of the incident light. Introducing the P-polarized light incident from the second surface can reduce the influence of the efficiency drop due to the reflectance of the second surface. Providing an antireflection film to the second surface can further reduce the influence caused by the reflectance. The light source may emit light of a single wavelength such as a laser, emit light having a spectrum of a predetermined wavelength band, or may include a polarization element such as a polarization plate for making polarized light.

The light modulating element 200 modulates the P-polarized light into the S-polarized light polarized in the second polarization direction by changing by 90° the polarization direction of the P-polarized light that has transmitted through the polarization beam splitter 100 and emits the S-polarized light to the polarization beam splitter 100.

The second polarization direction is a direction orthogonal to the first polarization direction, and parallel to the extending direction in this embodiment. This embodiment uses the light modulation element 200 made of liquid crystal, but may use another light modulator as long as the polarization direction is variable.

The polarization beam splitter 100 realizes the polarization separation by reflecting the S-polarized light that has been emitted from the light modulation element 200 and entered the first surface.

The polarization beam splitter 100 has the grating structure using a highly refractive index material, and can suppress a light quantity loss in a wide wavelength band and realize a high efficiency by using the method. Herein, as illustrated in FIG. 5, the efficiency is the product of the transmittance Tp of the P-polarized light and the reflectance Rs of the S-polarized light for the 45° incident light. The high efficiency means that the product of the transmittance Tp of the P-polarized light and the reflectance Rs of the S-polarized light is 85% or higher. In particular, the polarization beam splitter 100 can increase the efficiency for the wire grid type polarizer by using light in the visible wavelength band (400 to 700 nm).

According to this embodiment, the second surface reflects only the P-polarized light that has entered it. This is because the S-polarized light is reflected on the first surface and enters the second surface with a sufficiently small intensity, and the influence of reflection can be ignored. Thus, the polarization beam splitter 100 can obtain a desired characteristic for the 45° incident light because the reflection on the second surface contributes only to the reflection of the P-polarized light that has an angle near the Brewster angle and is likely to reduce the reflectance.

In the polarization beam splitter 100, the reflectance Rs of the S-polarized light from the grating structure side (air side) and the reflectance of the S-polarized light from the substrate 1 side are different from each other when the extinction coefficient is not exactly 0 (the reflectance Rs of the S-polarized light from the air side is slightly higher than the reflectance of the S-polarized light from the substrate 1 side). This is because when the grating structure includes a uniform film, the difference in refractive index between air and the grating structure is larger than that between the substrate 1 and the grating structure. Therefore, the polarization beam splitter 100 disposed so as to reflect the S-polarized light from the grating structure side (air side) is less likely to receive the loss, because the surface reflection component becomes high and the component transmitting in the grating structure becomes small.

While this embodiment introduces the incident light to the second surface, reflects it on the light modulation element 200, and then reflects it on the first surface, the incident light may enter the first surface, be reflected by the light modulation element 200, and then be reflected on the second surface.

A description will be given of an appropriate range of parameters of the grating structure. FIG. 4 is an enlarged sectional view of the polarization beam splitter 100, and illustrates the period P, the width (member width) W and the height t of the member 2.

(PERIOD)

A period P of the grating structure in this embodiment satisfies the following conditional expression (1) where n_base is a substrate refractive index of the substrate 1 for a use wavelength $\lambda$, and n is a refractive index of the member 2 for the use wavelength $\lambda$.

$$\lambda/n < P < \lambda/n\_base \qquad (1)$$

The high efficiency and wide wavelength band can be obtained by appropriately setting the period P according to the use wavelength $\lambda$ so as to satisfy the conditional expression (1). The conditional value exceeding the upper limit in the conditional expression (1) would generate a diffraction component of a first order or higher. When the conditional value exceeds the lower limit in the conditional expression (1), it is difficult to obtain the resonance effect due to the effective medium approximation.

Although the conditional expression (1) may be met with an arbitrary wavelength with an efficiency of 85% or higher that is considered to be a high polarization separation effect, the conditional expression (1) may be satisfied with all wavelengths where the efficiency is 85% or higher.

The numerical range of the conditional expression (1) may be replaced as follows:

$$1.6 \times \lambda/n < P < 0.8 \times \lambda/n\_base \qquad (2)$$

The numerical range of the conditional expression (1) may be further replaced as follows:

$$1.7 \times \lambda/n < P < 0.65 \times \lambda/n\_base \qquad (3)$$

(WIDTH OF MEMBER)

The polarization beam splitter 100 may have a polarization separation effect with a wavelength band having a certain width or wider. An optical apparatus, such as a projector, separates the polarization of one color among red, green, and blue using the same polarization beam splitter, so that the polarization beam splitter may have a polarization separation effect in a certain wavelength range corresponding to each color. When a single wavelength light source, such as a laser, is used, the light from the light source is incident generally as a light beam having a constant angular range. Thus, the polarization beam splitter may have a polarization separation effect not only for the 45° incident light but also for the incident light having an angle of about 45° with respect to the element surface (such as an angle from 40° to 50°).

The polarization beam splitter 100 causes a wavelength shift that approximately maximizes the efficiency due to the resultant change in the resonance condition as the change in the incident angle. Accordingly, the polarization beam splitter 100 may have a width equal to or larger than a certain value, such as 40 nm, for a wavelength band capable of the polarization separation effect when it is used in the visible wavelength band.

The polarization beam splitter 100 needs a high efficiency both in the transmission characteristic and in the reflection characteristic in order to acquire a high efficiency in a certain wavelength band or wider. Therefore, in this embodiment, the width W of the member 2 in the second direction satisfies the conditional expression (4) from the viewpoint of a filling rate of the grating structure.

$$0.1 \leq W/P \leq 0.6 \qquad (4)$$

Satisfying the conditional expression (4) can provide a high polarization separation effect in a wider wavelength range (with the efficiency of 85% or higher). When the conditional value exceeds the upper limit in the conditional expression (4), an excessively large filling factor results in a large contribution of the highly refractive material, and the high reflectance of the P-polarized light. Thereby, the transmittance of the P-polarized light lowers. When the conditional value exceeds the lower limit in the conditional expression (4), the low contribution of the highly refractive index material results in the reduced resonance effect, and cannot provide the higher efficiency. Thereby, the reflectance of the S-polarized light reduces. The numerical range of the conditional expression (4) may be set as follows:

$$0.2 \leq W/P \leq 0.5 \qquad (5)$$

The numerical range of the conditional expression (4) may be further set as follows:

$$0.25 \leq W/P \leq 0.4 \qquad (6)$$

(HEIGHT OF MEMBER)

Since the height t of the member in a direction orthogonal to the first and second directions affects a phase delay amount due to the grating structure, it is necessary to select an appropriate height in order to enhance the reflection of the S-polarized light. In this embodiment, the height t satisfies the following conditional expression (7) from the viewpoint of the aspect ratio of the member 2.

$$0.3 \leq t/W \leq 1.4 \qquad (7)$$

Satisfying the conditional expression (7) can broaden a wavelength band in which the polarization separation effect can be obtained. The conditional value exceeding the upper limit in the conditional expression (7) decreases the wavelength bandwidth that provides the efficiency of 85% or higher and the manufacturing stability. The conditional value exceeding the lower limit value in the conditional expression (7) decreases the wavelength bandwidth that provides the efficiency of 85% or higher.

The numerical range in the conditional expression (7) may be set as follows:

$$0.4 \leq t/W \leq 1.2 \qquad (8)$$

The numerical range in the conditional expression (7) may be further set as follows:

$$0.8 \leq t/W \leq 1.1 \qquad (9)$$

(MANUFACTURING METHOD)

The polarization beam splitter 100 is manufactured, for example, by forming a uniform thin film of the material of the member 2 on the substrate 1 through the vapor deposition, spin coating, etc., and by forming a grating structure through etching etc. In other words, the polarization beam splitter 100 can be manufactured by the small number of processing steps of forming the grating structure on or in the substrate. Where a mask is formed on the member 2 for etching, the mask material may remain on the grating structure in a range that does not significantly affect the characteristic of the polarization beam splitter 100. When the grating structure is formed by etching or the like, the substrate 1 may be scraped as long as the influence on the characteristic of the polarization beam splitter 100 is small. While the period of the grating structure is equal to or smaller than the use wavelength, it is easier to manufacture the grating structure than the existing wire grid or the like that premises the effective medium approximation since the period is longer than a period that enables the effective medium approximation. The manufacturing method according to this embodiment is merely illustrative, and the present invention is not limited to this embodiment.

(REFRACTIVE INDEX RATIO)

A resonance effect depends on a ratio of the refractive index of the member 2 to the interstitial medium and the refractive index of the substrate 1. As illustrated in FIG. 2, where a grating structure is formed on the substrate 1, the refractive index ratio between the substrate 1 and the member 2 (the refractive index of the member 2 divided by the refractive index of the substrate 1) may be 2 or higher. For example, when the refractive index of the substrate 1 is 1.5, the refractive index of the member 2 may be 3 or higher. As illustrated in FIG. 3, where the grating structure is formed in the substrate 1, the refractive index ratio between the substrate 1 and the member 2 (refractive index of the member 2 divided by refractive index of the substrate 1) may be 2.5 or higher. When the grating structure is formed on the substrate 1 and another medium different from the substrate 1 is filled between the members and in the grating structure, one of the refractive index ratio between the substrate 1 and the member 2 and the refractive index ratio between the interstitial medium and the member 2 may be 2.5 or higher. The refractive index ratio between the substrate 1 and the member 2 and the refractive index ratio between the interstitial medium and the member 2 may be 2.5 or higher.

(MATERIAL OF MEMBER 2)

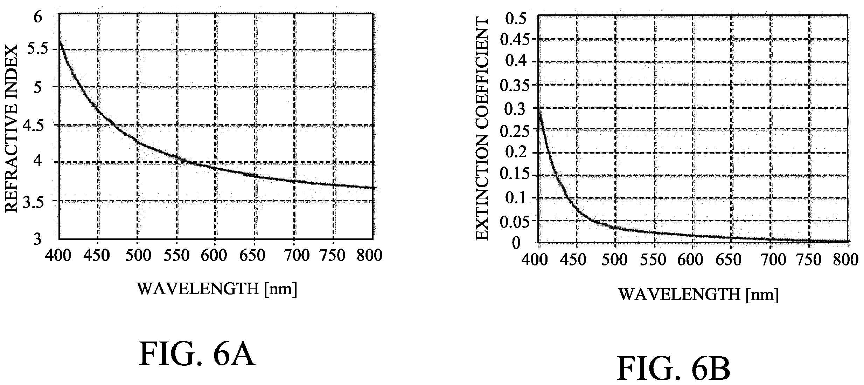

As described above, the member 2 may have a higher refractive index n and a lower extinction coefficient k for the use wavelength. For example, for the visible light, the above condition is satisfied when the member 2 contains any of silicon (excluding amorphous state), bismuth ferrite, and gallium arsenide (which is inappropriate in a short wavelength). The member 2 may contain 90% or higher of any of the above materials. Silicon of the above materials is suitable for the ingredient of the member 2 because silicon has a refractive index higher than 3.5 for a visible wavelength band and a low extinction coefficient. FIGs. 6A and 6B illustrate the refractive index and the extinction coefficient in the crystalline state of silicon, respectively. The numerical values of the refractive index and the extinction coefficient in FIGs. 6A and 6B are used to calculate the transmittance and the reflectance in the following embodiments.

(MATERIAL OF SUBSTRATE 1)

In order to obtain a desired polarization separation effect in both the transmission and the reflection of the polarization beam splitter 100, it is necessary that the substrate 1 is transparent (has a small loss) for the use wavelength. In addition to the grating structure formed on the substrate 1, the polarization beam splitter 100 may include, for example, an antireflection film on the second surface on which no grating structure is formed. However, a polarization beam splitter using a layer of a high absorption material, such as metal, in an optical path increases a light quantity loss. Therefore, a thickness of a medium, such as metal, having an extinction coefficient of 1 or higher may not be formed by 10 nm or more.
For example, the substrate 1 using the polarization beam splitter 100 for the visible light may be made of ordinary optical glass. As described above, a higher refractive index ratio is necessary for the resonance effect, and the refractive index of the substrate 1 may be low. Therefore, the substrate 1 using the polarization beam splitter 100 for the visible light may be a substrate having a refractive index of 1.5 or less such as a quartz substrate.

(EFFECTIVE BAND)

As described above, the polarization beam splitter 100 may have a wavelength range that provides the polarization separation effect. The following conditional expression (10) may be met in order to satisfy any one or all of the above conditional expressions (1) to (9).

$$0.1 \leq \Delta\lambda/\lambda\_max \qquad (10)$$

Herein, $\Delta\lambda$ is a width (wavelength bandwidth) of a wavelength band that provides the efficiency of 85% or higher, $\lambda\_max$ is a wavelength that is contained in the wavelength band that provides the efficiency of 85% or higher and maximizes the efficiency.
Satisfying the conditional expression (10) means that the wavelength range that provides the polarization separation effect is wider than a certain value, and can have a wider wavelength range or an incident angle. When the polarization beam splitter 100 is applicable to the image projection apparatus and can provide the efficiency of 85% or higher and a good characteristic for an incident light beam having a predetermined incident angle.
The numerical range in the conditional expression (10) may be set as follows:

$$0.14 \leq \Delta\lambda/\lambda\_max \qquad (11)$$

FIRST EMBODIMENT

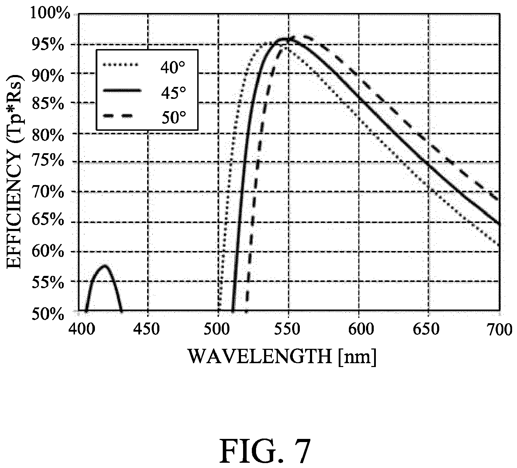

As illustrated in FIG. 1, the polarization beam splitter according to this embodiment includes a substrate, and a grating structure formed on the substrate. In the grating structure, a plurality of members extending along the extending direction are regularly arranged with a period of 230 nm along the orthogonal direction orthogonal to the extending direction. The width and height of the member are 68 nm and 60 nm, respectively. Each member is made of silicon and the substrate is made of quartz (assuming that the refractive index is 1.46 for the visible wavelength band and there is no dispersion in calculating the transmittance and the reflectance). The polarization beam splitter according to this embodiment has a function of polarized light separation for light having a wavelength near 550 nm.
Assume that the 45° incident light enters the polarization beam splitter according to this embodiment, Tp is a transmittance for the wavelength in the visible wavelength band of the light polarized in the polarization direction perpendicular to the extending direction and the incidence direction, and Rs is a reflectance for the wavelength in the visible wavelength band of the light polarized in the polarization direction parallel to the extending direction. FIG. 7 illustrates the efficiency as the product of the transmittance Tp and the reflectance Rs for the wavelength in the visible wavelength band. The transmittance Tp and the reflectance Rs are calculated by a method called RCWA (Rigorous Coupled-Wave Analysis) method. Herein, the transmittance Tp is the transmittance of the P-polarized light to the substrate, and the reflection influence on the back surface of the substrate is not considered. Actually, although the reflectance of the substrate surface may decrease the efficiency in use of the polarization beam splitter, the reflectance of the substrate surface can be reduced by providing an antireflection film matching the refractive index of the substrate.
As illustrated in FIG. 7, the polarization beam splitter according to this embodiment can obtain a good characteristic that provides the product of the transmittance Tp and the reflectance Rs of 85% or higher. In other words, the polarization beam splitter according to this embodiment is useful for a polarization beam splitter that provides the polarization separation which transmits light polarized in a polarization direction perpendicular to the extending direction and the incident direction from the substrate side (the side where the grating structure is not formed), and reflects light polarized in the polarization direction parallel to the extending direction from the grating structure side.
FIG. 7 illustrates the efficiency for an incident angle of 40° and the efficiency for an incident angle of 50° by a dotted line and a broken line, respectively. Even when the incident angle changes by 5° around 45°, the polarization beam splitter according to this embodiment can maintain the efficiency of 85% or higher for a wavelength in a range of 540 to 590 nm. In other words, the polarization beam splitter according to this embodiment is also useful for a polarization beam splitter used for a light beam having a predetermined incident angle range. The incident angle corresponds to the incident angle to the substrate on the section of the grating structure illustrated in FIG. 2 and is also expressed as (90° - (angle formed with the orthogonal direction)) [degrees].

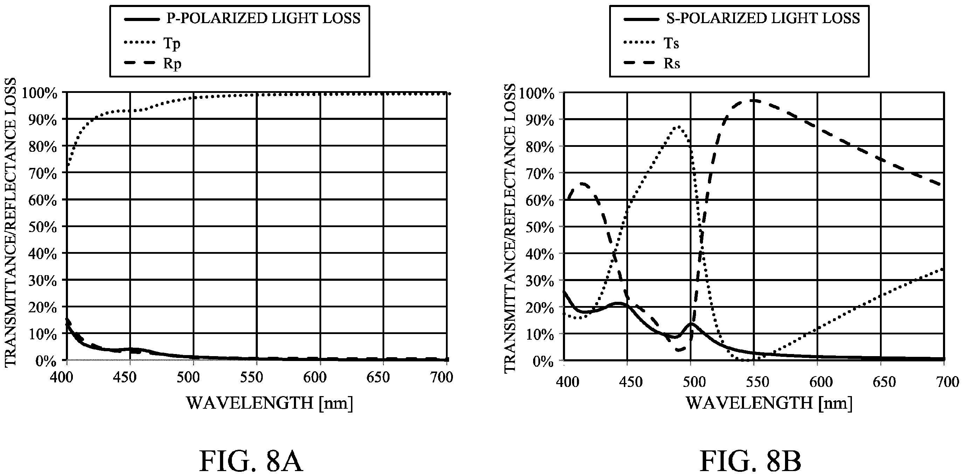

FIG. 8A illustrates the transmittance, the reflectance, and the light quantity loss of the P-polarized light when the 45° incident light enters the polarization beam splitter. FIG. 8B illustrates the transmittance, the reflectance, and the light quantity loss of the S-polarized light when the 45° incident light enters the polarization beam splitter. As indicated by the solid line in FIGs. 8A and 8B, the P-polarized light and the S-polarized light are little lost. In particular, for a wavelength in a range of 530 to 600 nm which provides the efficiency of 85% or higher, the light quantity loss of the P-polarized light in the transmission is 1% or less, and the light quantity loss of the S-polarized light in the reflection is as small as 5% or less. This configuration can reduce the calorific value of the polarization beam splitter even with a high intensity light source. This embodiment uses a material having a low extinction coefficient such as silicon for constructing the grating structure, and can realize a polarization beam splitter with few losses.

SECOND TO SEVENTH EMBODIMENTS

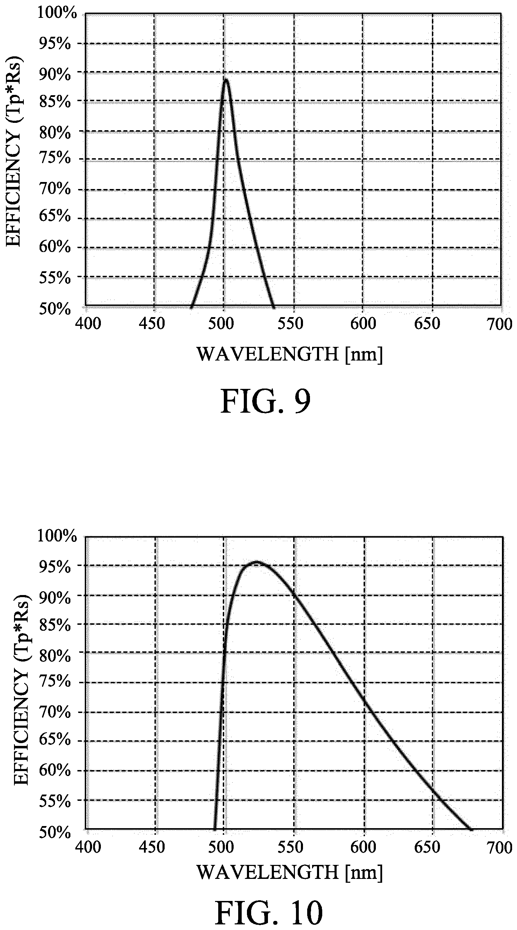

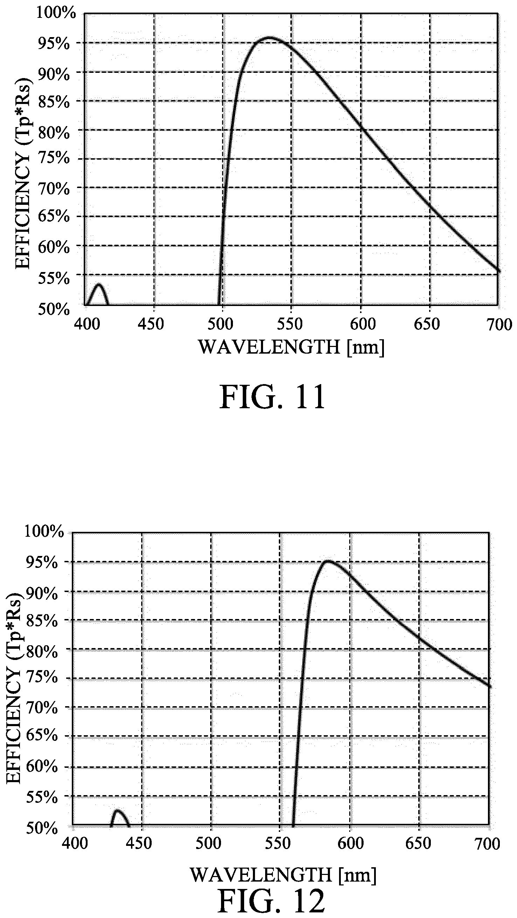

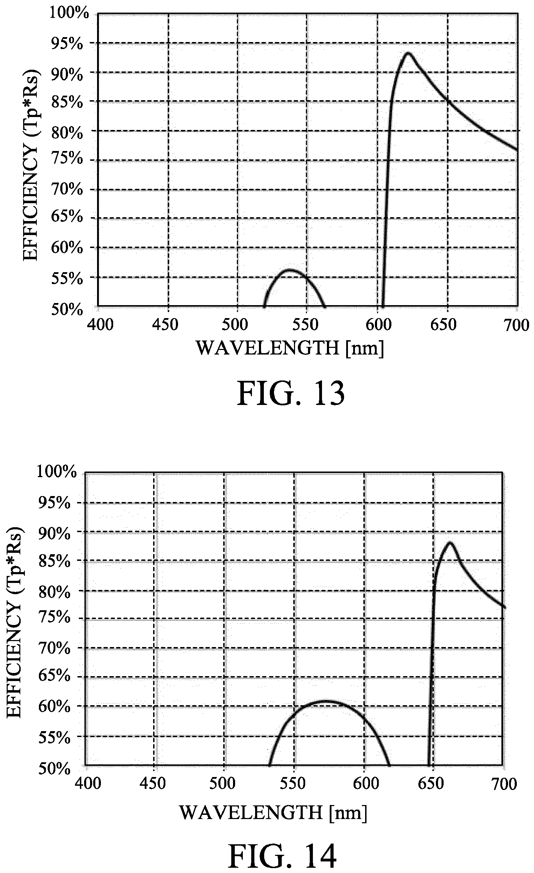

Each polarization beam splitter according to second to seventh embodiments is different from that according to the first embodiment in filling rate (a width of a member divided by a period of a grating structure). The other configuration is the same as that of the polarization beam splitter according to the first embodiment. FIGs. 9 to 14 illustrate the efficiencies of the polarization beam splitters according to the second to seventh embodiments for wavelengths in the visible wavelength band, respectively. The polarization beam splitter according to the second embodiment has a polarization separation function for light with a wavelength of around 500 nm. The polarization beam splitter according to the third embodiment has a polarization separation function for light with a wavelength of around 520 nm. The polarization beam splitter according to the fourth embodiment has a polarization separation function for light with a wavelength of around 530 nm. The polarization beam splitter according to the fifth embodiment has a polarization separation function for light with a wavelength of around 580 nm. The polarization beam splitter according to the sixth embodiment has a polarization separation function for light with a wavelength of around 620 nm. The polarization beam splitter according to the seventh embodiment has a polarization separation function for light with a wavelength of around 660 nm.

Satisfying the conditional expression (4), the polarization beam splitter according to each embodiment has a wavelength band that provides the efficiency of 85% or higher and obtains a good characteristic. Satisfying the expression (5), the polarization beam splitters according to the third to sixth embodiments have a wider wavelength band that provides the efficiency of 85% or higher and obtain a good characteristic. Satisfying the expression (6), the polarization beam splitters according to the fourth and fifth embodiments have a wider wavelength band that provides the efficiency of 85% or higher and obtain a good characteristic.

EIGHTH EMBODIMENT

The polarization beam splitter according to this embodiment has the same configuration as that according to the first embodiment. The grating structure has a period of 280 nm. The width and height of the member are 84 nm and 70 nm, respectively. The member is made of silicon and the substrate is made of quartz (assuming that there is no dispersion in calculating the transmittance and the reflectance at the refractive index of 1.46 in the visible range). The polarization beam splitter according to this embodiment has a polarization separation function for light with a wavelength near 650 nm.

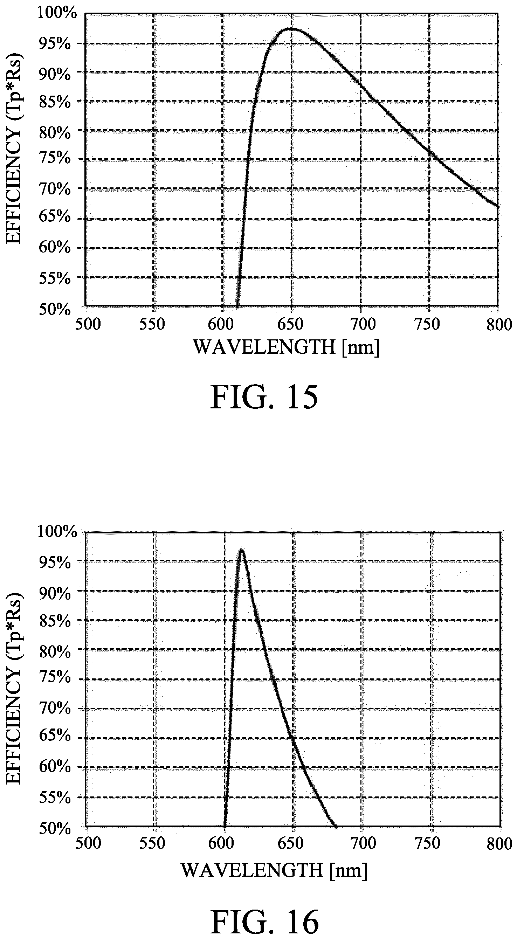

FIG. 15 illustrates the efficiency as the product of the transmittance Tp and the reflectance Rs at the wavelength in the visible wavelength band when the 45° incident light enters the polarization beam splitter according to this embodiment. As illustrated in FIG. 15, the polarization beam splitter according to this embodiment can obtain such a good characteristic that provides the product of the transmittance Tp and the reflectance Rs of 85% or higher. In other words, the polarization beam splitter according to this embodiment is useful for the polarization beam splitter that performs the polarization separation which transmits light polarized in the polarization direction perpendicular to the extending direction and the incidence direction from the substrate side (the side where the grating structure is not formed), and reflects light polarized in the polarization direction parallel to extending direction from the grating structure side.

NINTH TO THIRTEENTH EMBODIMENTS

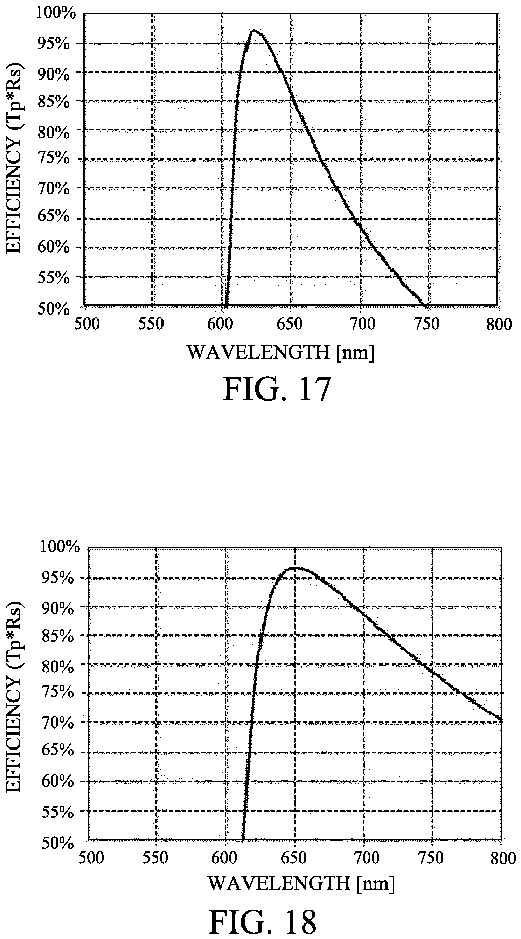

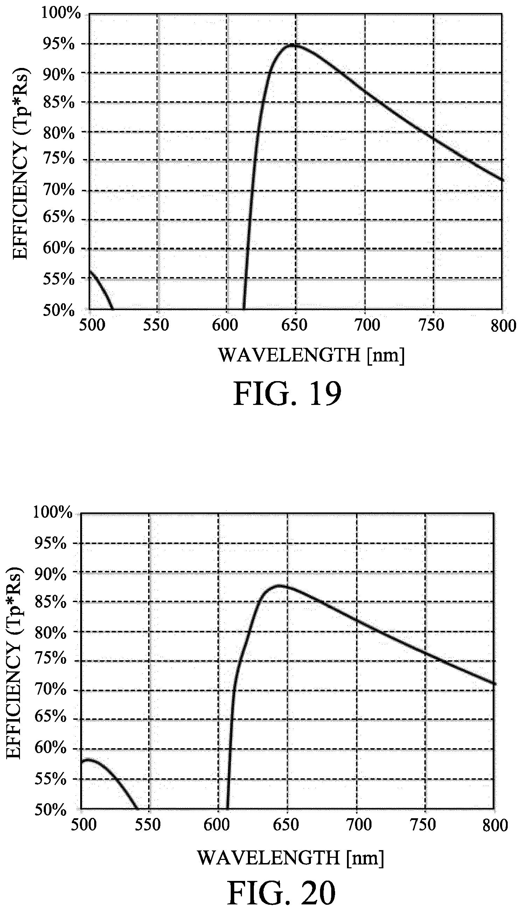

Each of the polarization beam splitters according to ninth to thirteenth embodiments is different in height from that according to the eight embodiment. The other configuration is the same as that according to the eighth embodiment. FIGs. 16 to 20 illustrate the efficiencies of the polarization beam splitters according to the ninth to thirteenth embodiments for wavelengths in the visible wavelength band, respectively. The polarization beam splitter according to the ninth embodiment has a polarization separation function for light with a wavelength near 610 nm. The polarization beam splitter according to the tenth embodiment has a polarization separation function for light with a wavelength near 620 nm. The polarization beam splitter according to the eleventh embodiment has a polarization separation function for light with a wavelength near 650 nm. The polarization beam splitter according to the twelfth embodiment has a polarization separation function for light with a wavelength near 650 nm. The polarization beam splitter according to the thirteenth embodiment has a polarization separation function for light with a wavelength near 640 nm.

Satisfying the conditional expression (7), the polarization beam splitter according to each embodiment has a wavelength band that provides the efficiency of 85% or higher, and obtains a good characteristic. Satisfying the conditional expression (8), the polarization beam splitters according to the tenth to thirteenth embodiments have a wider wavelength band that provides the efficiency of 85% or higher, and obtain a good characteristic. Satisfying the conditional expression (9), the polarization beam splitters according to eleventh and twelfth embodiments have a still wider wavelength band that provides the efficiency becomes 85% or higher, and obtains a better characteristic.

FOURTEENTH EMBODIMENT

The polarization beam splitter according to this embodiment has the same configuration as that of the first embodiment. The grating structure has a period of 180 nm. The width and height of the member are 54 nm and 40 nm, respectively. The member is made of silicon, and the substrate is made of quartz (assuming that the refractive index is 1.46 in the visible wavelength band and there is no dispersion in calculating the transmittance and the reflectance). The polarization beam splitter according to this embodiment has a polarization separation function for light with a wavelength near 460 nm.

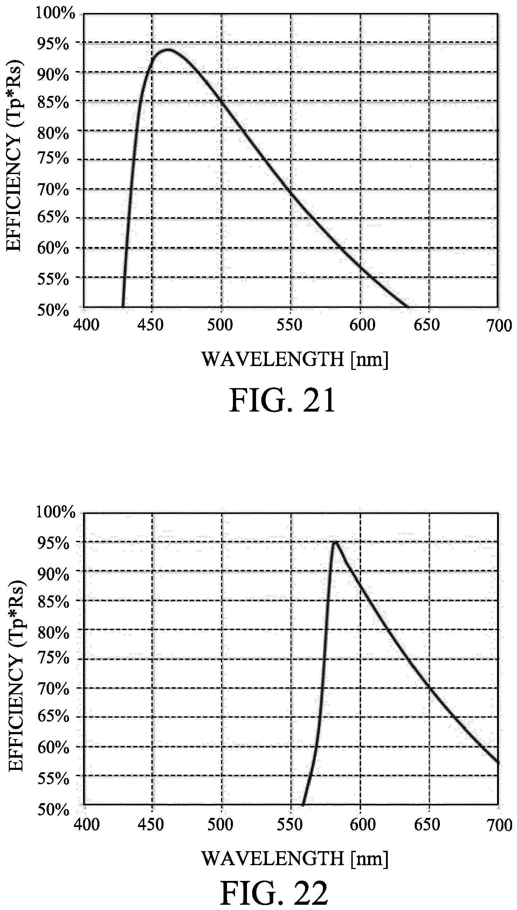

FIG. 21 illustrates the efficiency as the product of the transmittance Tp and the reflectance Rs at the wavelength in the visible wavelength band, when the 45° incident light enters the polarization beam splitter according to this embodiment. As illustrated in FIG. 21, the polarization beam splitter according to this embodiment can acquire a good characteristic that provides the product of the transmittance Tp and the reflectance Rs of 85% or higher. In other words, the polarization beam splitter according to this embodiment is useful for the polarization beam splitter that provides the polarization separation which transmits light polarized in a polarization direction perpendicular to the extending direction and the incident direction from the substrate side (the side where the grating structure is not formed), and reflects light polarized in the polarization direction parallel to the extending direction from the grating structure side.

FIFTEENTH EMBODIMENT

The polarization beam splitter according to this embodiment has the same configuration as that of the first embodiment. The grating structure has a period of 230 nm. The width and the height of the member are 68 nm and 60 nm, respectively. The member is made of silicon, and the substrate is a virtual substrate with a refractive index of 2 (no dispersion). The polarization beam splitter according to this embodiment has a polarization separation function for light with a wavelength of around 580 nm.

FIG. 22 illustrates the efficiency as the product of the transmittance Tp and the reflectance Rs at the wavelength in the visible wavelength band when the 45° incident light enters the polarization beam splitter according to this embodiment. As illustrated in FIG. 22, the polarization beam splitter according to this embodiment can acquire a good characteristic that provides the product of the transmittance Tp and the reflectance Rs of 85% or higher. In other words, the polarization beam splitter according to this embodiment is useful for the polarization beam splitter that provides the polarization separation which transmits light polarized in a polarization direction perpendicular to the extending direction and the incident direction from the substrate side (the side where the grating structure is not formed), and reflects light polarized in the polarization direction parallel to the extending direction from the grating structure side.

SIXTEENTH TO EIGHTEENTH EMBODIMENTS

Each of the polarization beam splitters according to sixteenth to eighteenth embodiments has the same configuration as that according to the first embodiment. The grating structure has a period of 230 nm. The width and the height of the member are 68 nm and 60 nm, respectively. The grating structures according to sixteenth to eighteenth embodiments are made of virtual materials with refractive indices of 2.8, 3, and 3.5, and no refractive index dispersion. The substrate is made of quartz (assuming that the refractive index is 1.46 in the visible wavelength band and there is no dispersion in calculating the transmittance and the reflectance). The polarization beam splitter according to the sixteenth embodiment has a polarization separation function for light with a wavelength of around 500 nm. The polarization beam splitter according to the seventeenth embodiment has a polarization separation function for light with a wavelength of around 500 nm. The polarization beam splitter according to the eighteenth embodiment has a polarization separation function for light with a wavelength of around 510 nm.

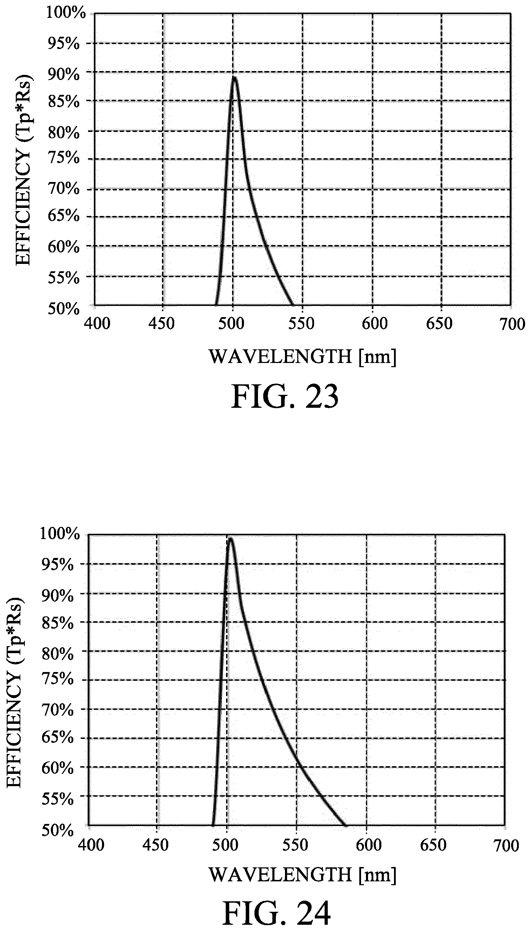

FIGs. 23 to 25 illustrate the efficiencies as the product of the transmittance Tp and the reflectance Rs for the wavelength in the visible wavelength band when the 45° incident light enters the polarization beam splitter according to the sixteenth to eighteenth embodiments. As illustrated in FIGs. 23 to 25, the polarization beam splitter according to each embodiment can acquire a good characteristic that provides the product of the transmittance Tp and the reflectance Rs of 85% or higher. In other words, the polarization beam splitter according to each embodiment is useful for the polarization beam splitter that provides the polarization separation which transmits light polarized in the polarization direction perpendicular to the extending direction and the incident direction from the substrate side (the side where the grating structure is not formed), and reflects light polarized in the polarization direction parallel to the extending direction from the grating structure side.

NINETEENTH EMBODIMENT

As illustrated in FIG. 3, the polarization beam splitter according to this embodiment includes a substrate, and a grating structure formed in the substrate. The grating structure has a period of 200 nm. The width and the height of the member are 60 nm and 60 nm, respectively. The member is made of silicon and the substrate is made of quartz (assuming that the refractive index is 1.46 in the visible wavelength band and there is no dispersion in calculating the transmittance and the reflectance). The polarization beam splitter according to this embodiment has a polarization separation function for light with a wavelength near 510 nm.

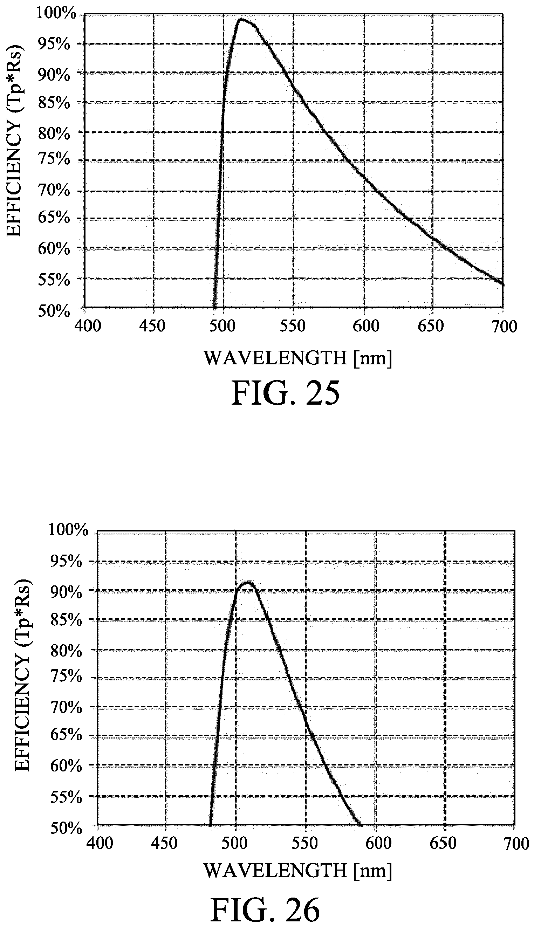

FIG. 26 illustrates the efficiency as the product of the transmittance Tp and the reflectance Rs for the wavelength in the visible wavelength band when the 45° incident light enters the polarization beam splitter according to this embodiment. As illustrated in FIG. 26, the polarization beam splitter according to this embodiment can obtain a good characteristic that provides the product of the transmittance Tp and the reflectance Rs of 85% or higher. In other words, the polarization beam splitter according to this embodiment is useful for the polarization beam splitter that provides the polarization separation which transmits light polarized in a polarization direction perpendicular to the extending direction and the incident direction from the substrate side (the side where the grating structure is not formed), and reflects light polarized in the polarization direction parallel to the extending direction from the grating structure side.

TWENTIETH EMBODIMENT

The polarization beam splitter of this embodiment has the same structure as that according to the nineteenth embodiment. The grating structure has a period of 280 nm. The width and the height of the member are 84 nm and 80 nm, respectively. The member is made of silicon and the substrate is made of quartz (assuming that the refractive index is 1.46 in the visible wavelength band and there is no dispersion in calculating the transmittance and the reflectance). The polarization beam splitter according to this embodiment has a polarization separation function for light with a wavelength near 690 nm.

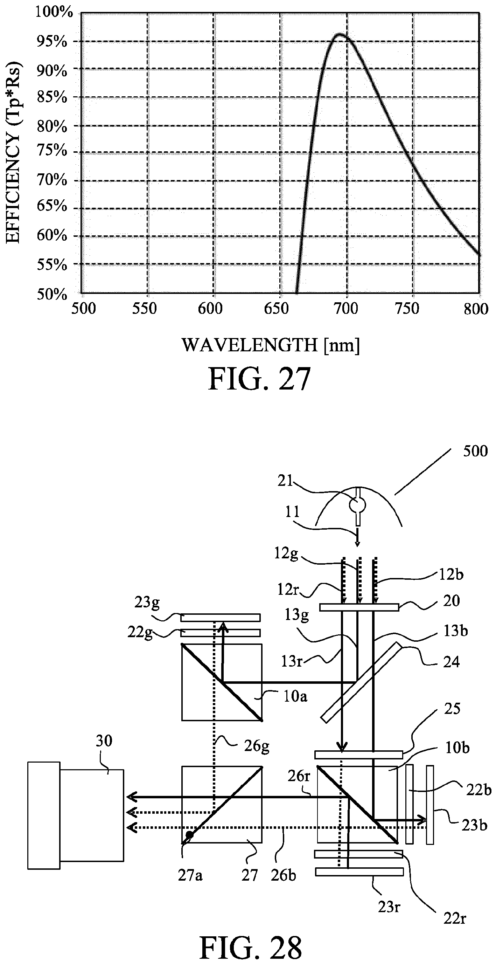

FIG. 27 illustrates the efficiency as the product of the transmittance Tp and the reflectance Rs for the wavelength in the visible wavelength band, when the 45° incident light enters the polarization beam splitter according to this embodiment. As illustrated in FIG. 27, the polarization beam splitter according to this embodiment can acquire a good characteristic that provides the product of the transmittance Tp and the reflectance Rs of 85% or higher. In other words, the polarization beam splitter according to this embodiment is useful for the polarization beam splitter that provides the polarization separation which transmits light polarized in a polarization direction perpendicular to the extending direction and the incident direction from the substrate side (the side where the grating structure is not formed), and reflects light polarized in the polarization direction parallel to the extending direction from the grating structure side.

TWENTY-FIRST EMBODIMENT

FIG. 28 illustrates a configuration of a liquid crystal projector (image projection apparatus) 500 using any of the polarization beam splitters according to each embodiment. The liquid crystal projector 500 includes a light source lamp 210, a polarization conversion element 22, a dichroic mirror 24, a wavelength selective retardation plate 25, and polarization beam splitters 10a and 10b. At least one of the polarization beam splitters 10a and 10b corresponds to the polarization beam splitter described in any of the embodiments. The polarization beam splitter may use a green polarization beam splitter described in the first embodiment or a red polarization beam splitter described in the eighth embodiment.

The liquid crystal projector 500 includes reflection type liquid crystal panels 23g, 23b, and 23r as light modulation elements, retardation plates 22b, 22g, and 22r, a color combination prism 27, and a projection lens (projection optical system) 30.

White light (including green light 12g, blue light 12b, and red light 12r) emitted from the light source lamp 21 passes through an illumination optical system including the polarization conversion element 20, becomes a parallel light beam 11, and enters the polarization conversion element 20.

The polarization conversion element 20 converts non-polarized light incident from the light source lamp 21 into S-polarized light (green polarized light 13g, blue polarized light 13b, and red polarized light 13r). Next, the green polarized light 13g among the green polarized light 13g, the blue polarized light 13b, and the red polarized light 13r incident on the dichroic mirror 24 is reflected by the dichroic mirror 24, and the blue polarized light 13b and the red polarized light 13r pass through the dichroic mirror 24. The green polarized light 13g is reflected by the polarization beam splitter 10a, passes through the retardation plate 22g, and enters the green reflection type liquid crystal panel 23g. The blue polarized light 13b and the red polarized light 13r enter the wavelength selective retardation plate 25, and the polarization direction of the red polarized light 13r is converted by 90° by the wavelength selective retardation plate 25. Thereby, the blue polarized light 13b as the S-polarized light and the red polarized light 13r as the P-polarized light enter the polarization beam splitter 10b.

The blue polarized light 13b is reflected by the polarization beam splitter 10b, passes through the retardation plate 22b, and enters the blue reflection type liquid crystal panel 23b. The red polarized light 13r passes through the polarization beam splitter 10b, passes through the retardation plate 22r, and enters the red reflection type liquid crystal panel 23r. An optical system from the dichroic mirror 24 to the polarization beam splitters 10a and 10b corresponds to a color separation optical system that separates the light from the light source into a plurality of color light beams.

Each reflection type liquid crystal panel reflects and modulates incident light according to an image signal, and generates image light (green image light 26g, blue image light 26b, and red image light 26r). The green image light 26g modulated by the green reflection type liquid crystal panel 23g again passes through the retardation plate 22g, passes through the polarization beam splitter 10a, and enters the color combination prism 27. The blue image light 26b modulated by the blue reflection type liquid crystal panel 23b again passes through the retardation plate 22b, passes through the polarization beam splitter 10b, and enters the color combination prism 27. The red image light 26r modulated by the red reflection type liquid crystal panel 23r again passes through the retardation plate 22r, is reflected by the polarization beam splitter 10b, and enters the color combination prism 27.

The green light 26g is reflected by a dichroic film 27a in the color combination prism 27, and the blue image light 26b and the red image light 26r pass through the dichroic film 27a. Thereby, the green light 26g, the blue image light 26b, and the red image light 26r are combined with one another and enter a projection lens 30, and are projected onto a projection surface, such as an unillustrated screen, by the projection lens 30. The polarization beam splitter 10b and the color synthesizing prism 27 constitute a color combination optical system.

This embodiment makes the color separation optical system and the color combination optical system of an integrated color separation and combination optical system, but the color separation optical system and the color combination optical system may be separated from each other, for example, in using a transmission type liquid crystal panel. The light modulation element may use one other than a liquid crystal panel such as a digital micromirror device (DMD).

The liquid crystal projector according to this embodiment can suppress the light quantity loss by using the polarization beam splitter described in any of the embodiments in at least one of the polarization beam splitters 10a and 10b.

This embodiment uses the polarization conversion element 20 to convert the non-polarized light from the light source lamp 21 to the S-polarized light, but may convert it into the P-polarized light. This embodiment separates the green light out of the white light by the dichroic mirror 24, but may separate other color light.

Table 1 shows the parameters in the grating structure according to each embodiment, the wavelength that provides the maximum efficiency, and the wavelength bandwidth where the efficiency is 85% or higher.

# TABLE 1

| | Period P[nm] | Thin line width W[nm] | Grating height t[nm] | Filling rate W/P | Aspect ratio t/W | Grating material | Substrate | Refractive index ratio | Bandwidth Δλ[nm] | Maximum efficiency wavelength λ_max[nm] | Δλ/λ_max | λ_max/n [nm] | λ_max/ n_base [nm] |
|---|---|---|---|---|---|---|---|---|---|---|---|---|---|
| 1st | 230 | 68 | 60 | 0.30 | 0.88 | silicon | n=1.46 | 2.94 | 80 | 550 | 0.15 | 128 | 377 |
| 2nd | 230 | 23 | 60 | 0.10 | 2.61 | silicon | n=1.46 | 2.87 | 10 | 500 | 0.02 | 119 | 342 |
| 3rd | 230 | 46 | 60 | 0.20 | 1.30 | silicon | n=1.46 | 2.84 | 60 | 520 | 0.12 | 125 | 356 |
| 4th | 230 | 58 | 60 | 0.25 | 1.04 | silicon | n=1.46 | 2.79 | 80 | 530 | 0.15 | 130 | 363 |
| 5th | 230 | 92 | 60 | 0.40 | 0.65 | silicon | n=1.46 | 2.73 | 70 | 580 | 0.12 | 145 | 397 |
| 6th | 230 | 115 | 60 | 0.50 | 0.52 | silicon | n=1.46 | 2.67 | 40 | 620 | 0.06 | 159 | 425 |
| 7th | 230 | 138 | 60 | 0.60 | 0.43 | silicon | n=1.46 | 2.62 | 10 | 660 | 0.02 | 172 | 452 |
| 8th | 280 | 84 | 70 | 0.30 | 0.83 | silicon | n=1.46 | 2.63 | 90 | 650 | 0.14 | 169 | 445 |
| 9th | 280 | 84 | 30 | 0.30 | 0.36 | silicon | n=1.46 | 2.68 | 20 | 610 | 0.03 | 156 | 418 |
| 10th | 280 | 84 | 40 | 0.30 | 0.48 | silicon | n=1.46 | 2.67 | 50 | 620 | 0.08 | 159 | 425 |
| 11th | 280 | 84 | 80 | 0.30 | 0.95 | silicon | n=1.46 | 2.63 | 90 | 650 | 0.14 | 169 | 445 |
| 12th | 280 | 84 | 90 | 0.30 | 1.07 | silicon | n=1.46 | 2.63 | 90 | 650 | 0.14 | 169 | 445 |
| 13th | 280 | 84 | 100 | 0.30 | 1.19 | silicon | n=1.46 | 2.64 | 50 | 640 | 0.08 | 166 | 438 |
| 14th | 180 | 54 | 40 | 0.30 | 0.74 | silicon | n=1.46 | 3.15 | 60 | 460 | 0.13 | 100 | 315 |
| 15th | 230 | 68 | 60 | 0.30 | 0.88 | silicon | n=2 | 2.00 | 30 | 580 | 0.05 | 145 | 290 |
| 16th | 230 | 68 | 60 | 0.30 | 0.88 | n=2.8 | n=1.46 | 1.92 | 10 | 500 | 0.02 | 179 | 342 |
| 17th | 230 | 68 | 60 | 0.30 | 0.88 | n=3 | n=1.46 | 2.05 | 20 | 500 | 0.04 | 167 | 342 |
| 18th | 230 | 68 | 60 | 0.30 | 0.88 | n=3.5 | n=1.46 | 2.40 | 50 | 510 | 0.10 | 146 | 349 |
| 19th | 200 | 60 | 60 | 0.30 | 1.00 | silicon | n=1.46 | 2.91 | 30 | 510 | 0.06 | 120 | 349 |
| 20th | 280 | 84 | 80 | 0.30 | 0.95 | silicon | n=1.46 | 2.59 | 50 | 690 | 0.07 | 182 | 473 |

EMBODIMENT

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

A polarization beam splitter (100) includes a substrate (1), and members. Each member has a refractive index of 2.8 or higher and an extinction coefficient of 1 or smaller for a predetermined wavelength. The polarization beam splitter provides a product with 85% or higher of a transmittance of light for the predetermined wavelength polarized in a first polarization direction perpendicular to the first direction and an incidence direction of incident light on the polarization beam splitter which forms an angle of 90° with respect to the first direction and an angle of 45° with respect to the second direction, and a reflectance of light for the predetermined wavelength polarized in a second polarization direction parallel to the first direction.

**Claims**

1. A polarization beam (100) splitter comprising:

   a substrate (1); and
   a plurality of members that extend in a first direction and are arranged in or on the substrate in a second direction orthogonal to the first direction with a predetermined period,
   **characterized in that** each member has a refractive index of 2.8 or higher and an extinction coefficient of 1 or smaller for a predetermined wavelength,
   wherein the polarization beam splitter provides a product with 85% or higher of a transmittance of light for the predetermined wavelength polarized in a first polarization direction perpendicular to the first direction and an incidence direction of incident light on the polarization beam splitter which forms an angle of 90° with respect to the first direction and an angle of 45° with respect to the second direction, and a reflectance of light for the predetermined wavelength polarized in a second polarization direction parallel to the first direction.

2. The polarization beam splitter according to claim 1, wherein the plurality of members are arranged on a first surface of the substrate, and
   wherein the polarization beam splitter transmits the light polarized in the first polarization direction incident light on a second surface opposite to the first surface, and reflects the light polarized in the second polarization direction incident on the first surface.

3. The polarization beam splitter according to claim 1 or 2, wherein the following conditional expression is satisfied:

$$\lambda/n < P < \lambda/n\_base$$

   where P is the predetermined period, $\lambda$ is the predetermined wavelength, n is the refractive index of each member for the predetermined wavelength, and n base is a refractive index of the substrate for the predetermined wavelength.

4. The polarization beam splitter according to any one of claims 1 to 3, wherein the following conditional expression is satisfied:

$$0.1 \leq W/P \leq 0.6$$

   where P is the predetermined period, and W is a width of each member in the second direction.

5. The polarization beam splitter according to any one of claims 1 to 4, wherein the following conditional expression is satisfied:

$$0.3 \leq t/W \leq 1.4$$

   where t is a height of each member in a direction orthogonal to the first direction and the second direction, and W is a width of each member in the second direction.

6. The polarization beam splitter according to any one of claims 1 to 5, wherein the following conditional expression is satisfied:

$$0.1 \leq \Delta\lambda / \lambda\_max$$

where $\Delta\lambda$ is a bandwidth of a wavelength band that makes the product of 85% or higher, and $\lambda\_max$ is a wavelength that is contained in the wavelength band that makes the product of 85% or higher and that maximizes the product.

7. The polarization beam splitter according to any one of claims 1 to 6, wherein the plurality of members are arranged on the substrate, and the following conditional expression is satisfied:

$$2 \leq n/n\_base$$

where n is the refractive index of the member for the predetermined wavelength, and n_base is a refractive index of the substrate for the predetermined wavelength.

8. The polarization beam splitter according to any one of claims 1 to 6, **characterized in that** the plurality of members are arranged in the substrate, and the following conditional expression is satisfied:

$$2.5 \leq n/n\_base$$

where n is the refractive index of the member for the predetermined wavelength, and n_base is a refractive index of the substrate for the predetermined wavelength.

9. The polarization beam splitter according to any one of claims 1 to 8, **characterized in that** each member contains at least one of silicon, bismuth ferrite, and gallium arsenide.

10. The polarization beam splitter according to any one of claims 1 to 9, **characterized in that** the predetermined wavelength is a wavelength selected from a wavelength band from 400 nm to 700 nm.

11. An image projection apparatus **characterized in** comprising:

a polarization beam splitter according to any one of claims 1 to 10; and
a light modulation element configured to modulate the light polarized in the first polarization direction that has transmitted through the polarization beam splitter into the light polarized in the second polarization direction, and to emit the light polarized in the second polarization direction to the polarization beam splitter.

FIG. 1

FIG. 2

100

FIG. 3

100

FIG. 4

FIG. 5

FIG. 6A

FIG. 6B

19

FIG. 7

FIG. 8A

FIG. 8B

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

Europäisches
Patentamt

European
Patent Office

Office européen
des brevets

# EUROPEAN SEARCH REPORT

Application Number

EP 18 19 6224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2016/116754 A1 (WANG BIN [US]) 28 April 2016 (2016-04-28) * paragraphs [0004], [0017] - [0020], [0042], [0043], [0047], [0048]; figure 1 * | 1-11 | INV. G02B5/18 G02B5/30 G02B27/28 |
| A | WO 00/57215 A1 (MEMS OPTICAL INC [US]) 28 September 2000 (2000-09-28) * figures 4,5 * | 1 | |
| A | EP 1 510 838 A1 (CANON KK [JP]) 2 March 2005 (2005-03-02) * paragraphs [0035] - [0047]; figures 1,2,9b * | 1 | |
| Y | WO 2017/131581 A1 (AGENCY SCIENCE TECH & RES [SG]) 3 August 2017 (2017-08-03) * paragraphs [0014] - [0018], [0026], [0027], [0046], [0055], [0072] - [0076]; figures 1b,7 * | 1-11 | |
| A,D | ROBERT MAGNUSSON; MEHRDAD SHOKOOH-SAREMI: "Physical basis for wideband resonant reflectors", OPTICS EXPRESS, THE OPTICAL SOCIETY, vol. 16, no. 5, 2008, pages 3456-3462, XP055551890, * the whole document * | 1 | TECHNICAL FIELDS SEARCHED (IPC) G02B |
| A | DE 10 2007 047681 A1 (FRAUNHOFER GES FORSCHUNG [DE]; UNIV SCHILLER JENA [DE]) 23 April 2009 (2009-04-23) * paragraphs [0026], [0041], [0063] * | 1 | |
| A | EP 1 180 711 A1 (SEIKO EPSON CORP [JP]) 20 February 2002 (2002-02-20) * paragraph [0072]; figure 2b * | 1 | |

The present search report has been drawn up for all claims

| Place of search | Date of completion of the search | Examiner |
|---|---|---|
| Munich | 7 February 2019 | Mollenhauer, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 6224

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2019

| Patent document cited in search report | | Publication date | Patent family member(s) | | Publication date |
|---|---|---|---|---|---|
| US 2016116754 | A1 | 28-04-2016 | JP 2017533451 A<br>KR 20170073598 A<br>US 2016116754 A1<br>WO 2016069103 A1 | | 09-11-2017<br>28-06-2017<br>28-04-2016<br>06-05-2016 |
| WO 0057215 | A1 | 28-09-2000 | AU 3763800 A<br>EP 1090315 A1<br>JP 2002540446 A<br>JP 2005338882 A<br>US 6426837 B1<br>WO 0057215 A1 | | 09-10-2000<br>11-04-2001<br>26-11-2002<br>08-12-2005<br>30-07-2002<br>28-09-2000 |
| EP 1510838 | A1 | 02-03-2005 | EP 1510838 A1<br>JP 4593894 B2<br>JP 2005077819 A<br>US 2005078372 A1<br>US 2007058251 A1 | | 02-03-2005<br>08-12-2010<br>24-03-2005<br>14-04-2005<br>15-03-2007 |
| WO 2017131581 | A1 | 03-08-2017 | SG 11201805700P A<br>US 2019018176 A1<br>WO 2017131581 A1 | | 30-07-2018<br>17-01-2019<br>03-08-2017 |
| DE 102007047681 | A1 | 23-04-2009 | NONE | | |
| EP 1180711 | A1 | 20-02-2002 | CN 1363052 A<br>EP 1180711 A1<br>EP 1688766 A2<br>EP 1818696 A2<br>EP 2275845 A1<br>JP 3975749 B2<br>JP 4254900 B2<br>JP 4803236 B2<br>JP 4816818 B2<br>JP 2008152287 A<br>JP 2009086672 A<br>JP 2011107724 A<br>KR 100441162 B1<br>TW 528887 B<br>TW 528888 B<br>US 2003071972 A1<br>US 2003179345 A1<br>WO 0155778 A1 | | 07-08-2002<br>20-02-2002<br>09-08-2006<br>15-08-2007<br>19-01-2011<br>12-09-2007<br>15-04-2009<br>26-10-2011<br>16-11-2011<br>03-07-2008<br>23-04-2009<br>02-06-2011<br>21-07-2004<br>21-04-2003<br>21-04-2003<br>17-04-2003<br>25-09-2003<br>02-08-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Physical basis for wideband resonant reflectors. **ROBERT MAGNUSSON ; MEHRDAD SHOK-OOH-SAREMI.** Optics express. The Optical Society, 2008, vol. 16, 3456-3462